# EUROPEAN PATENT APPLICATION

(11) **EP 4 498 184 A1**
(43) Date of publication of application: **29.01.2025**
(21) Application number: 24189434.4
(22) Date of filing: 18.07.2024
(51) Int. Cl.: G05B 13/02

(54) **ELECTRONIC DEVICE FOR IMPLEMENTING TEMPERATURE PREDICTION AND CONTROL SYSTEM AND CONTROL METHOD THEREOF**

(30) Priority: 25.07.2023 KR 20230096478
(71) Applicant: Ineeji Co., Ltd., Seongnam-si, Gyeonggi-do 13558 (KR)
(72) Inventor: SHIN, Hyeon A, 01839 Seoul (KR); IM, Hyo Jin, 13560 Seongnam-si (KR); YOO, Bo Seon, 06623 Seoul (KR)
(74) Representative: Nederlandsch Octrooibureau

(57) **Abstract**

Disclosed is an electronic device for implementing a temperature prediction and control system. The electronic device includes a communication interface, a memory in which a trained first neural network model and a trained second neural network model are stored, and one or more processors configured to perform preprocessing, when process information including fuel input information for a glass melting device is received through the communication interface, on the received process information, input the preprocessed process information into the trained first neural network model to obtain first predicted temperature information corresponding to a first position of the glass melting device, input the obtained first predicted temperature information and the process information into the trained second neural network model obtain second predicted temperature information corresponding to a second position of the glass melting device, and provide guidance information including the obtained first predicted temperature information and the obtained second predicted temperature information.

## Description

### CROSS-REFERENCE TO RELATED APPLICATION

This application claims priority to and the benefit of Korean Patent Application No.2023-0096478, filed on July 25, 2023, the disclosure of which is incorporated herein by reference in its entirety.

### BACKGROUND

### 1. Field of the Invention

The present disclosure relates to an electronic device for implementing a temperature prediction and control system and a control method thereof, and more particularly, to an electronic device for predicting a temperature of a lower portion of a glass melting device using a trained neural network model and controlling fuel input into the glass melting device based on the predicted temperature and a control method thereof.

### 2. Discussion of Related Art

When glass raw materials are fed into a glass melting furnace (or glass melting device) through an On Board Charge (OBC), heat is applied to the glass raw material inside the melting furnace via a burner or electric booster included in the glass melting device. The molten glass in the melting furnace is discharged through a throat.

On the other hand, there is an appropriate range for the temperature and loading height of the molten glass in the glass melting furnace. In this case, there is a problem that it is difficult to maintain the temperature and loading height of the molten glass due to uncertainties such as frequent changes in the discharged volume or moisture content contained in the raw materials.

### SUMMARY OF THE INVENTION

The present disclosure is directed to providing an electronic device, which predicts the temperature of a specific position in a glass melting device using a trained neural network model and provides a user with guidance information for reducing the amount of input fuel while maintaining an appropriate process temperature based on the predicted temperature information, and a control method thereof.

According to an aspect of the present invention, there is provided an electronic device for implementing a temperature prediction and control system, which includes a communication interface, a memory in which a trained first neural network model and a trained second neural network model are stored, and one or more processors configured to perform preprocessing, when process information including fuel input information for a glass melting device is received through the communication interface, on the received process information.

The one or more processors may input the preprocessed process information into the trained first neural network model and obtain first predicted temperature information corresponding to a first position of the glass melting device.

The one or more processors may input the obtained first predicted temperature information and the process information into the trained second neural network model and obtain second predicted temperature information corresponding to a second position of the glass melting device.

The one or more processors may provide guidance information including the obtained first predicted temperature information and the obtained second predicted temperature information.

According to another aspect of the present invention, there is provided a control method of an electronic device for implementing a temperature prediction and control system, which includes performing preprocessing, when process information including fuel input information for a glass melting device is received, on the received process information.

The control method may include inputting the preprocessed process information into the trained first neural network model and obtaining first predicted temperature information corresponding to a first position of the glass melting device.

The control method may include inputting the obtained first predicted temperature information and the process information into the trained second neural network model and obtaining second predicted temperature information corresponding to a second position of the glass melting device.

The control method may include providing guidance information including the obtained first predicted temperature information and the obtained second predicted temperature information.

According to still another aspect of the present invention, there is provided a non-transitory computer-readable recording medium that stores, when executed by a processor of an electronic device for implementing a temperature prediction and control system, computer commands that cause the electronic device to perform operations which include performing preprocessing, when process information including fuel input information for a glass melting device is received, on the received process information.

The operation may include inputting the preprocessed process information into a trained first neural network model and obtaining first predicted temperature information corresponding to a first position of the glass melting device.

The operation may include inputting the obtained first predicted temperature information and the process information into a trained second neural network model and obtaining second predicted temperature information corresponding to a second position of the glass melting device.

The operation may include providing guidance information including the obtained first predicted temperature information and the obtained second predicted temperature information.

### BRIEF DESCRIPTION OF THE DRAWINGS

The above and other objects, features and advantages of the present disclosure will become more apparent to those of ordinary skill in the art by describing exemplary embodiments thereof in detail with reference to the accompanying drawings.
FIG. 1 is a diagram schematically illustrating a control method of an electronic device according to one embodiment.
FIG. 2 is a block diagram illustrating a configuration of an electronic device according to one embodiment.
FIG. 3 is a flowchart illustrating a control method of an electronic device according to one embodiment.
FIG. 4 is a diagram illustrating a trained first neural network model according to one embodiment.
FIG. 5 is a diagram illustrating a trained second neural network model according to one embodiment.
FIG. 6 is a diagram illustrating a method of providing guidance information according to one embodiment.
FIG. 7 is a diagram illustrating a method of obtaining temperature change information according to one embodiment.
FIG. 8 is a diagram illustrating a method of obtaining temperature change information according to one embodiment.
FIGS. 9A to 9D are diagrams illustrating a method of providing a user interface (UI) according to one embodiment.
FIG. 10 is a diagram illustrating a method of identifying control information to transmit the control information to a control engine according to one embodiment.
FIG. 11 is a block diagram illustrating a detailed configuration of an electronic device according to one embodiment.

### DETAILED DESCRIPTION OF EXEMPLARY EMBODIMENTS

Hereinafter, the present disclosure will be described in detail with reference to the accompanying drawings.

Terms used in this specification will be briefly described, and the present disclosure will be described in detail.

Terms used in the embodiments of the present disclosure have been selected as general terms that are currently widely used as much as possible while considering the functions in the present disclosure, but this may vary depending on the intention or precedent of a technician working in the art, the emergence of new technology, etc. In addition, in certain cases, there are terms arbitrarily selected by the applicant, and in this case, the meaning will be described in detail in the description part of the relevant disclosure. Therefore, the terms used in this disclosure should be defined based on the meaning of the term and the overall content of this disclosure, rather than simply the name of the term.

In this specification, expressions such as "have," "may have," "include," or "may include" refer to the presence of the corresponding feature (e.g., component such as numerical value, function, operation, or part), and does not rule out the existence of additional features.

The expression at least one of A or/and B should be understood as referring to either "A" or "B" or "A and B."

As used herein, expressions such as "first," "second," "primary," or "secondary," can modify various components regardless of order and/or importance, and can refer to one component. It is only used to distinguish from other components and does not limit the components.

When it is mentioned that a first component is (operatively or communicatively) coupled with/to or is connected to a second component, it is to be understood that the first component is directly coupled with/to the second component or may be coupled with/to the second component through a third component.

Singular expressions include plural expressions unless the context clearly dictates otherwise. In this application, terms such as "comprise" are "consist of" are intended to designate the presence of features, numbers, steps, operations, components, parts, or combinations thereof described in the specification, but do not preclude the possibility of the presence or addition of one or more other features, numbers, steps, operations, components, parts, or combinations thereof.

In the embodiments, "module" or "unit" may perform at least one function or operation, and be implemented as hardware or software or be implemented as a combination of hardware and software. In addition, a plurality of "modules" or a plurality of "units" may be integrated in at least one module and be implemented as at least one processor (not shown) except for a "module" or an "unit" that needs to be implemented as specific hardware.

An electronic device according to one embodiment of the present disclosure may include an artificial intelligence model (or artificial neural network model or learning network model) including at least one neural network layer. The artificial neural network may include deep neural network (DNN), such as convolutional neural network (CNN), recurrent neural network (RNN), restricted Boltzmann machine (RBM), deep belief network (DBN), bidirectional recurrent deep neural network (BRDNN) or deep Q-network, etc., but are not limited to the above examples.

In addition, in this specification, "parameter" is a value used in a calculation process of each layer constituting a neural network and may include, for example, a weight used when applying an input value to a predetermined calculation equation. In addition, parameters can be expressed in a matrix form. The parameters are values set as a result of training, and can be updated through separate training data as needed.

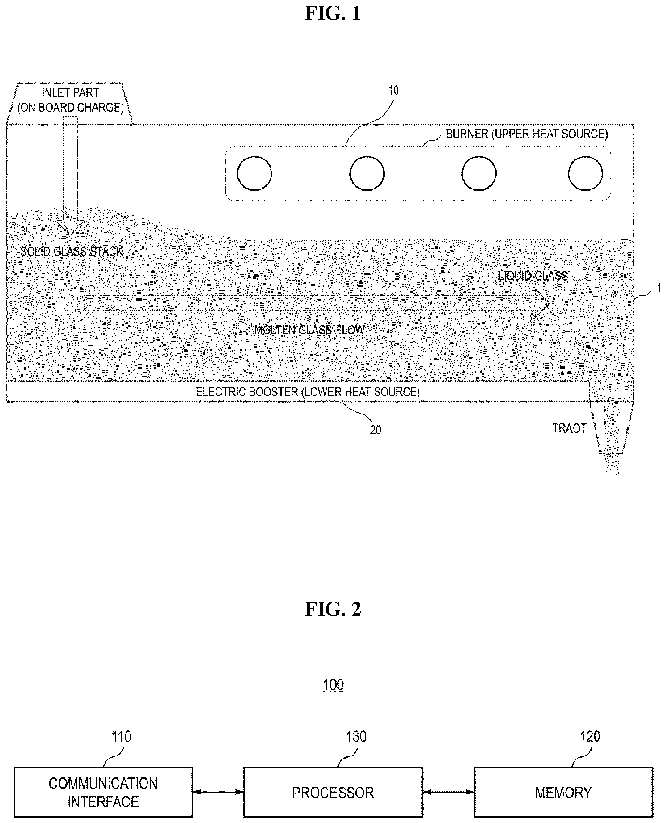

FIG. 1 is a diagram schematically illustrating a control method of an electronic device according to one embodiment.

Referring to FIG. 1, a glass melting device 1 according to one embodiment may include a plurality of fuel input units including a plurality of burners 10 and an electric booster 20. The burner 10 is a heat source corresponding to the relatively upper side of the glass melting device 1, and the electric booster 20 is a heat source corresponding to the relatively lower side of the glass melting device 1. The temperature of the molten glass contained in the glass melting device 1 may be maintained depending on the amount of fuel input to the burner and the electric booster.

According to one embodiment, the electronic device 100 may obtain predicted temperature information corresponding to a specific position of the glass melting device 1 based on process information of the glass melting device 1, and provide guidance information to guide the amount of fuel to be supplied to the plurality of fuel input units based on the obtained predicted temperature information.

Hereinafter, various embodiments of predicting the temperature of a specific position in the glass melting device 1 using a trained neural network model and providing guidance information to reduce the amount of input fuel while maintaining an appropriate process temperature based on the predicted temperature information will be described.

FIG. 2 is a block diagram illustrating a configuration of an electronic device according to one embodiment.

Referring to FIG. 2, an electronic device 100 may include a communication interface 110, a memory 120, and one or more processors 130.

The electronic device 100 according to one embodiment may be implemented as a device that processes data and communicates with an external device, such as a server, but is not limited thereto. For example, the electronic device 100 may be implemented as various devices such as a smart TV, tablet, monitor, smartphone, desktop computer, laptop computer, etc. The electronic device 100 according to one embodiment of the present disclosure is not limited to the above-mentioned devices, and the electronic device 100 may be implemented as an electronic device 100 having two or more functions of the above-mentioned devices.

Meanwhile, the electronic device 100 may communicate with external devices and external servers in various ways. According to one embodiment, communication modules for communication with external devices and external servers may be implemented in the same way. For example, the electronic device 100 may communicate with an external device using a Bluetooth module, and also communicate with an external server using the Bluetooth module.

According to another embodiment, communication modules for communication with external devices and external servers may be implemented separately. For example, the electronic device 100 may communicate with an external device using a Bluetooth module and communicate with an external server using an Ethernet modem or a Wi-Fi module.

Meanwhile, according to one embodiment, an external device (not shown) may be implemented as the glass melting device 1, but is not limited thereto.

The communication interface 110 may transmit and receive various types of data to and from external devices (e.g., source devices), external storage media (e.g., a USB memory), and external servers (e.g., web hard drives) through communication methods using AP-based Wi-Fi (a wireless local area network (LAN) network), Bluetooth, ZigBee, a wired/wireless LAN, a wide area network (WAN), Ethernet, IEEE 1394, a high-definition multimedia interface (HDMI), a Universal Serial Bus (USB), a mobile high-definition link (MHL), an audio engineering society/European broadcasting union (AES/EBU), an optical method, a coaxial method, etc.

According to one embodiment, the communication interface 110 may include a Bluetooth low energy (BLE) module. BLE refers to a Bluetooth technology that enables transmission and reception of low-power and low-capacity data in a frequency band of 2.4 GHz within a reach radius of approximately 10 m. However, the communication interface 110 is not limited to the BLE module and includes a Wi-Fi communication module. That is, the communication interface 110 may include at least one of a BLE module and a Wi-Fi communication module.

According to one embodiment, the communication interface 110 may use another communication module to communicate with an external device and an external server, such as a remote control device. For example, the communication interface 110 may use at least one of an Ethernet module and a Wi-Fi module to communicate with an external server and use a Bluetooth module to communicate with an external device such as a remote control device. However, this is only an example, and the communication interface 110 may use at least one communication module among various communication modules in the case of communication with a plurality of external devices or external servers.

The memory 120 may store data needed for various embodiments. The memory 120 may be implemented as a memory embedded in the electronic device 100 or as a memory detachable from the electronic device 100 depending on the data storage purpose. For example, data for driving the electronic device 100 may be stored in the memory embedded in the electronic device 100, and data for the expansion function of the electronic device 100 may be stored in the memory detachable from the electronic device 100.

Meanwhile, in the case of the memory embedded in the electronic device 100, it may be implemented as at least one of a volatile memory (e.g., a dynamic RAM (DRAM), a static RAM (SRAM), or a synchronous dynamic RAM (SDRAM)), and a non-volatile memory (e.g., a one time programmable ROM (OTPROM), a programmable RAM (PROM), an erasable and programmable ROM (EPROM), an electrically erasable and programmable ROM (EEPROM), a mask ROM, a flash ROM, a flash memory (e.g., a NAND flash or NOR flash, etc.), a hard drive, or a solid state drive (SSD)). In addition, in the case of the memory detachable from the electronic device 100, it may be implemented in the form of a memory card (e.g., a compact flash (CF), a secure digital (SD) card, a micro secure digital (Micro-SD) card, a mini secure digital (Mini-SD) card, an extreme digital (xD) card, a multi-media card (MMC), etc.), an external memory connectable to a USB port (e.g., a USB memory), or the like.

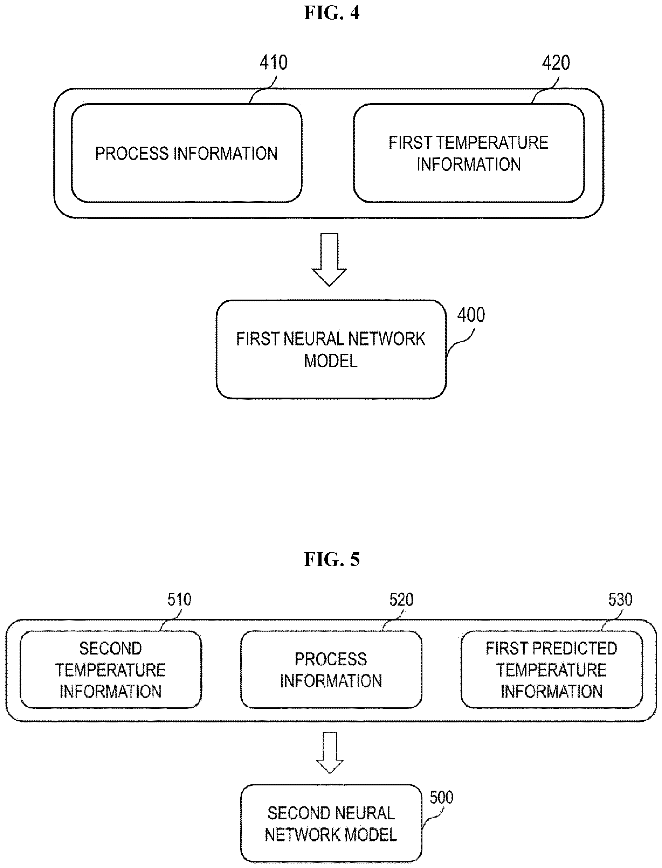

According to one embodiment, the memory 120 may store a trained first neural network model and a trained second neural network model. Meanwhile, the trained first neural network model and the trained second neural network model will be described in detail with reference to FIGS. 4 and 5.

The one or more processors 130 (hereinafter referred to as processor) are electrically connected to the communication interface 110 and the memory 120 to control the overall operation of the electronic device 100. The processor 130 may be formed of one or multiple processors. Specifically, the processor 130 may perform the operation of the electronic device 100 according to various embodiments of the present disclosure by executing at least one instruction stored in the memory 120.

According to one embodiment, the processor 130 may be implemented as a digital signal processor (DSP), a microprocessor, a graphics processing unit (GPU), an artificial intelligence (AI) processor, and a neural processing unit (NPU), or a time controller (TCON), but is not limited thereto. The processor 130 may include one or more of a central processing unit (CPU), a micro controller unit (MCU), a micro processing unit (MPU), a controller, an application processor (AP), a communication processor (CP), and an ARM processor, or may be defined by the corresponding term. In addition, the processor 130 may be implemented as a SoC (System on Chip) with a built-in processing algorithm, a large scale integration (LSI), or as an application specific integrated circuit (ASIC) or a field programmable gate array (FPGA).

According to one embodiment, the processor 130 may be implemented as a DSP, a microprocessor, or a TCON. However, the processor 130 is not limited thereto and may include one or more of a CPU, an MCU, an MPU, a controller, an AP, a CP, and an ARM processor, or may be defined by the corresponding term. In addition, the processor 130 may be implemented as an SoC or LSI with a built-in processing algorithm or implemented in the form of an FPGA.

According to one embodiment, the processor 130 may receive process information including fuel input information for the glass melting device 1 through the communication interface 110. Here, the process information is information on the overall environment of the glass melting device 1 in which a glass melting process is performed. According to one embodiment, the process information may include fuel input information on fuel input into the glass melting device 1 to perform the glass melting process or process state information corresponding to the glass melting device 1.

The fuel input information may include information on the amount of fuel input to perform the glass melting process. According to one embodiment, the fuel input information may include information on the amount of input fuel corresponding to each of the plurality of fuel input units included in the glass melting device 1. Meanwhile, the process state information corresponding to the glass melting device 1 may include, for example, process environment information for the glass melting device 1. The process state information may include at least one of information on the amount of oxygen input into the glass melting device 1, information on a discharged volume (or the amount of production) discharged from the glass melting device 1, surrounding environmental information of the glass melting device 1, and power amount information of an electronic booster included in the glass melting device 1. The environmental information around the glass melting device 1 may include, for example, temperature information or humidity information within the glass melting device 1.

According to one embodiment, when the process information is received, the processor 130 may perform preprocessing on the received process information. According to one example, the processor 130 may identify outlier data among a plurality of pieces of data included in the received process information using a predetermined algorithm, and obtain process information from which the identified outlier data has been removed. Alternatively, when process information corresponding to a predetermined time period is not received during the process is performed, the processor 130 may perform preprocessing after receiving process information that has not been received from the communication interface 110. However, the present disclosure is not limited to this.

According to one embodiment, the processor 130 may input the pre-processed process information into the trained first neural network model to obtain first predicted temperature information corresponding to a first position of the glass melting device 1.

Here, according to one embodiment, the first position of the glass melting device 1 may be a position corresponding to the relatively upper side (or ceiling) of the glass melting device 1. A temperature sensor may be provided at the first position of the glass melting device 1, and a temperature at the relatively upper side of the glass melting device 1 may be identified through the sensor corresponding to the first position. In this case, the temperature at the relatively upper side may be a temperature of the vaporized gas of a melted material. According to one example, the processor 130 may input the pre-processed process information into the trained first neural network model stored in the memory 120 to obtain first predicted temperature information corresponding to the first position of the glass melting device 1. Here, a plurality of types of temperature information including first predicted temperature information and second predicted temperature information may include information on temperature values.

Meanwhile, the trained first neural network model will be described in detail with reference to FIG. 4.

According to one embodiment, the processor 130 may input the obtained first predicted temperature information and the process information into the trained second neural network model to obtain second predicted temperature information corresponding to a second position of the glass melting device 1.

Here, according to one embodiment, the second position of the glass melting device 1 may be a position corresponding to a relatively lower side of the glass melting device 1 (or the bottom surface provided at the lower end of the glass melting device 1 to be in contact with the molten glass) of the glass melting device 1. A temperature sensor may be provided at the first position of the glass melting device 1, and the temperature at the relatively lower side of the glass melting device 1 may be identified through a sensor corresponding to the second position. In this case, the temperature at the relatively lower side may be the temperature of the melted material (or molten glass). According to one embodiment, the processor 130 may input the preprocessed process information and the first predicted temperature information into the trained second neural network model stored in the memory 120 to obtain second predicted temperature information corresponding to the second position of the glass melting device 1. That is, in order to accurately measure the temperature of the molten glass, information on the temperature of the gas within the glass melting device 1 (or the temperature of the upper portion of the glass melting device 1) is required.

Meanwhile, the trained second neural network model will be described in detail with reference to FIG. 5.

According to one embodiment, the processor 130 may provide guidance information including the obtained first predicted temperature information and the obtained second predicted temperature information. According to one embodiment, when the obtained second predicted temperature information is identified to be out of a predetermined range, the processor 130 may obtain guidance information to guide the second predicted temperature information to fall within the predetermined range based on information stored in the memory 120. According to one embodiment, the memory 120 may store information on a reference temperature range corresponding to each of the first position and the second position.

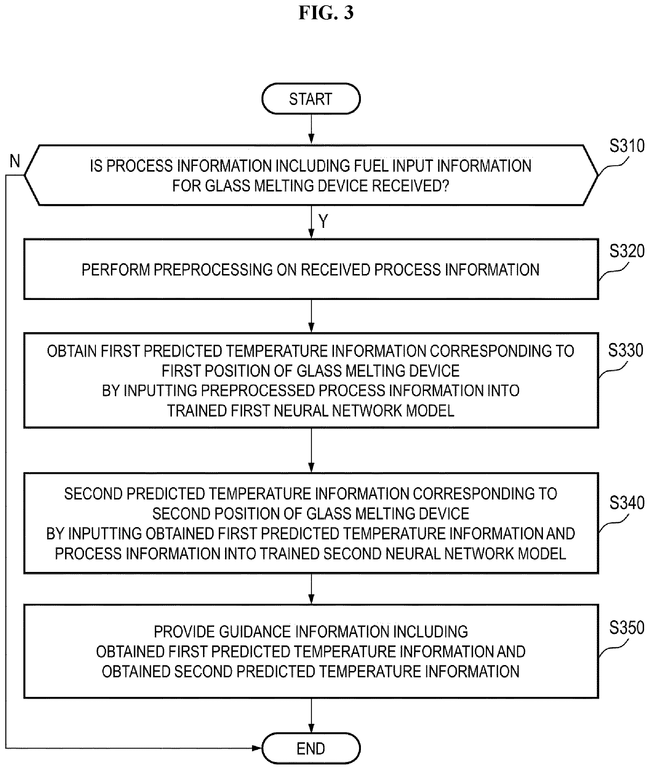

FIG. 3 is a flowchart illustrating a control method of an electronic device according to one embodiment.

Referring to FIG. 3, according to one embodiment, in operation 310, the control method may identify whether process information including fuel input information for the glass melting device 1 is received.

Next, according to one embodiment, when the process information is received (Y in S310), the control method may perform preprocessing on the received process information in operation S320. According to one example, the processor 130 may identify outlier data among a plurality of pieces of data included in the received process information using a predetermined algorithm, and obtain process information from which the identified outlier data has been removed.

Next, according to one embodiment, in operation S330, the control method may input the preprocessed process information into a trained first neural network model to obtain first predicted temperature information corresponding to a first position of the glass melting device 1. According to one embodiment, the processor 130 may input the process information including preprocessed fuel input information and process state information to the trained first neural network model stored in the memory 120 to obtain the first predicted temperature information.

Next, according to one embodiment, in operation S340, the control method may input the obtained first predicted temperature information and process information into a trained second neural network model to obtain second predicted temperature information corresponding to a second position of the glass melting device 1. According to one embodiment, the processor 130 may input the first predicted temperature information and the process information received through the communication interface 110 into the trained second neural network model stored in the memory 120 to obtain the second predicted temperature information.

Next, according to one embodiment, in operation 350, the control method may provide guidance information including the obtained first predicted temperature information and the obtained second predicted temperature information.

According to one embodiment, when the obtained second predicted temperature information is identified to be out of a predetermined range, the processor 130 may obtain guidance information to guide the second predicted temperature information to fall within the predetermined range based on the information stored in the memory 120.

For example, when the second predicted temperature information is identified to be greater than a first threshold, the processor 130 may obtain and provide guidance information to guide the second predicted temperature information to be less than or equal to the first threshold. Alternatively, for example, when the obtained second predicted temperature information is identified as being less than a second threshold, the processor 130 may obtain and provide guidance information to guide the second predicted temperature information to be greater than or equal to the second threshold.

According to the above-described embodiment, it is possible to predict an internal temperature of the glass melting device 1 and the temperature of the molten glass by using the trained neural network model. Based on this, the electronic device 100 may provide the user with the guidance information for minimizing the amount of input fuel while maintaining the temperature of the molten glass within an appropriate range.

FIG. 4 is a diagram illustrating a trained first neural network model according to one embodiment.

An artificial neural network (or neural network model) including a trained first neural network model and a trained second neural network model according to one embodiment of the present disclosure may include a deep neural network (DNN). For example, the artificial neural network may include a convolutional neural network (CNN), a recurrent neural network (RNN), a restricted Boltzmann machine (RBM), a deep belief network (DBN), a bidirectional recurrent deep neural network (BRDNN), a deep Q-networks, etc., but is not limited to the above examples.

According to one embodiment, the trained first neural network model may be stored in the memory 120. When process information including information on the amount of fuel input to the glass melting device 1 is input, the trained first neural network model may be trained to output first predicted temperature information according to the amount of the input fuel.

Referring to FIG. 4, according to one embodiment, a data set containing process information 410 including fuel input information and process state information may be input to a first neural network model 400 as training data to allow the first neural network model to be trained. In this case, the data set may include first temperature information 420 output based on (or due to) the input fuel as a label.

For example, the data set containing the process information including the information on the amount of input fuel and the process state information at an n^{th} time point may be input into the first neural network model as the trained data to allow the neural network model to be trained. In this case, the data set may include temperature information corresponding to the first position of the glass melting device 1 at an (n+1)^{th} time point of a first preheating chamber, which is measured based on the amount of fuel input at the n^{th} time point, as a label, so that training may be performed.

FIG. 5 is a diagram illustrating a trained second neural network model according to one embodiment.

According to one embodiment, the memory 120 may store a trained second neural network model. According to one example, when the first predicted temperature information and received process information output through the trained first neural network model are input, the trained second neural network model may be trained to output the second predicted temperature information according to the amount of the input fuel. Here, the second predicted temperature information is predicted temperature information corresponding to the lower end (or molten glass) of the glass melting device 1.

Referring to FIG. 5, according to one embodiment, a data set containing process information 520 and first predicted temperature information 530 is input into the second neural network model 500 as training data to allow the second neural network model 500 to be trained. Here, the first predicted temperature information 530 is information output from the trained first neural network model 400. According to one embodiment, the process information 520 may include fuel input information and process information. In this case, according to one embodiment, the data set may include second temperature information 510 output based on (or due to) the input fuel as a label. The second temperature information is temperature information measured from a sensor provided at the second position of the glass melting device 1.

For example, a data set containing process information including information on the amount of input fuel and process state information at the n^{th} time point, and first predicted temperature information corresponding to the first position output from the trained first neural network model 400 may be input into the second neural network model as training data to allow the neural network model to be trained. In this case, the data set may contain temperature information corresponding to the second position of the glass melting device 1 at the (n+1)^{th} time point in the first preheating chamber, which is measured based on the amount of fuel input at the n^{th} time point, as a label, so that training may be performed.

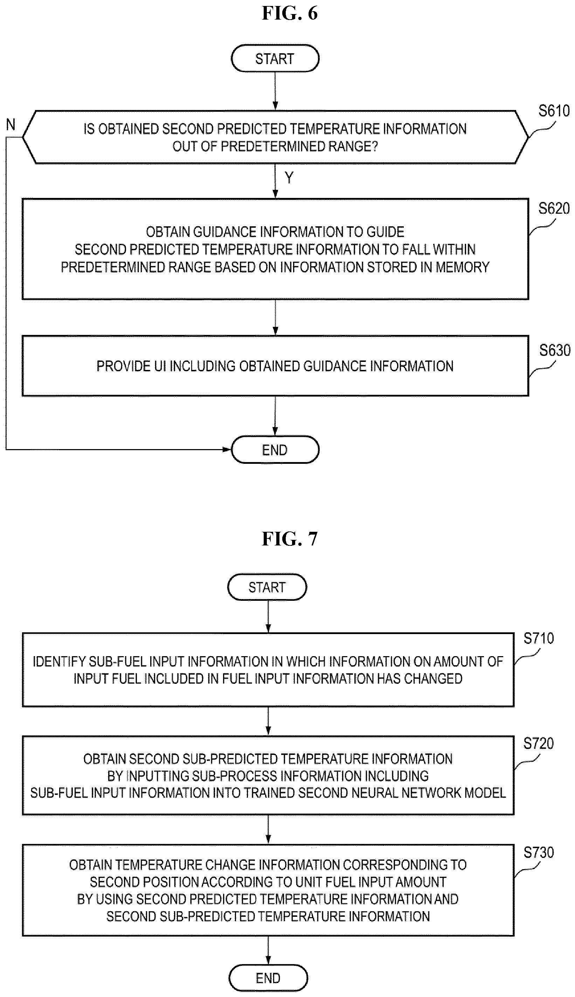

FIG. 6 is a diagram illustrating a method of providing guidance information according to one embodiment.

Referring to FIG. 6, in operation S610, the control method according to one embodiment may identify whether obtained second predicted temperature information is out of a predetermined range.

According to one embodiment, the memory 120 may store reference range information corresponding to the second predicted temperature information. According to one example, when the second predicted temperature information is obtained, the processor 130 may identify whether the obtained second predicted temperature is within a reference range based on the information stored in the memory 120.

Next, according to one embodiment, when the second predicted temperature information is out of the predicted range (Y in S610), in operation S620, the control method may obtain guidance information to guide the second predicted temperature information to fall within the predetermined range based on the information stored in the memory 120. According to one embodiment, the memory 120 may further include temperature change information corresponding to the second position according to a unit fuel input amount. That is, when fuel corresponding to a predetermined unit is input into the glass melting device 1, information on the magnitude of the temperature change at the second position may be stored in the memory 120. The processor 130 may use the temperature change information stored in the memory 120 to obtain guidance information for ensuring that the second predicted temperature information falls within the predetermined range.

Meanwhile, the processor 130 according to one embodiment may obtain the temperature change information using the trained neural network model. This will be described in detail with reference to FIG. 7.

Next, in operation S630, the control method according to one embodiment may provide a user interface (UI) including the obtained guidance information.

FIG. 7 is a diagram illustrating a method of obtaining temperature change information according to one embodiment.

Referring to FIG. 7, in operation S710, the control method according to one embodiment may identify sub-fuel input information in which information on the amount of input fuel included in the fuel input information has changed. Here, the sub- fuel input information may be process information in which the amount of input fuel has been changed by a predetermined value.

Next, in operation S720, the control method according to one embodiment may obtain second sub-predicted temperature information by inputting sub-process information including the sub-fuel input information into the trained second neural network model. According to one embodiment, when the sub-fuel input information is identified, the processor 130 may obtain the sub-process information in which the magnitude of the identified input fuel amount is updated. The processor 130 may obtain second sub-predicted temperature information by inputting the sub-process information into the trained second neural network model. Here, the second sub-predicted temperature information refers to predicted temperature information corresponding to the sub-fuel input information in which the amount of the input fuel has changed.

Next, in operation S730, the control method according to one embodiment may use the second predicted temperature information and the second sub-predicted temperature information to obtain the temperature change information corresponding to the second position according to the unit fuel input amount. According to one embodiment, the processor 130 may compare the second predicted temperature information output through the trained second neural network model and the second sub-predicted temperature information to obtain second temperature change information corresponding to the second position according to the unit fuel input amount.

However, the present disclosure is not limited to this, and according to one embodiment, the second temperature change information corresponding to the second position according to the unit fuel input amount may be previously stored in the memory 120. Alternatively, according to one embodiment, obviously, the processor 130 may obtain the second temperature change information corresponding to the second position according to the unit fuel input amount by using process history information on the glass melting device 1 through a predetermined algorithm. Here, the process history information may include history information on input fuel and history information on process state.

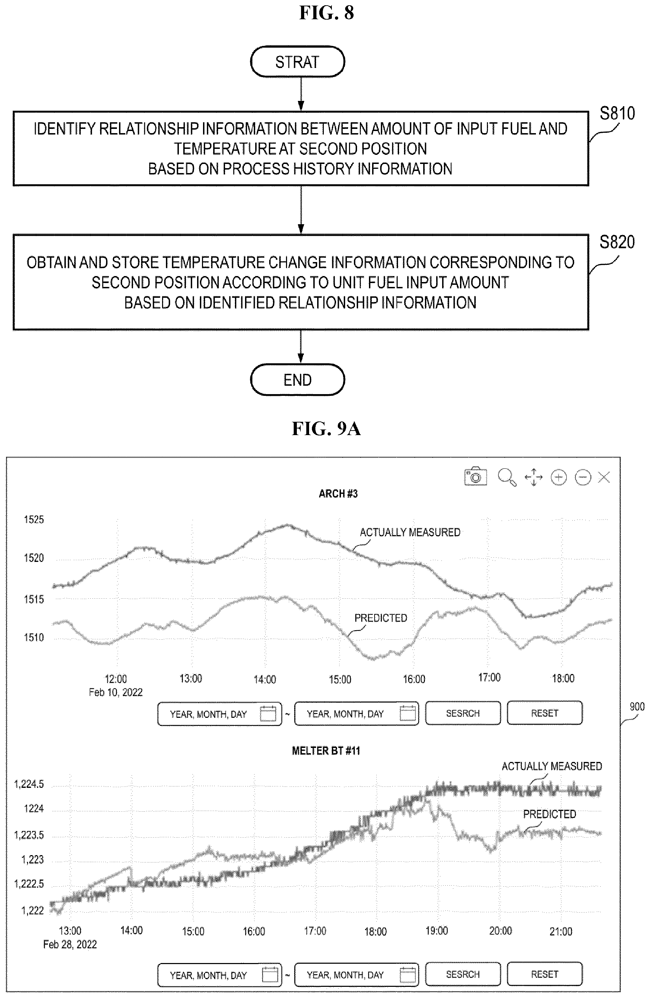

FIG. 8 is a diagram illustrating a method of obtaining temperature change information according to one embodiment.

Referring to FIG. 8, in operation S810, the control method according to one embodiment may identify relationship information between the amount of input fuel and the temperature of the second position based on process history information. Here, the process history information may include history information on the input fuel, history information on the process state, and temperature history information of the second position.

Meanwhile, the relationship information may be a formula corresponding to the relationship between input fuel information and the temperature value of the second position obtained using a regression analysis model. According to one embodiment, the processor 130 may use a predetermined algorithm (e.g., a regression analysis model) to obtain the relationship information between the input fuel information and the temperature value of the second position from the process history information including the history information on the input fuel, the history information on the process state, and the temperature history information of the second position.

Next, in operation S820, the control method according to one embodiment may obtain and store temperature change information corresponding to the second position according to the unit fuel input amount based on the identified relationship information. According to one embodiment, the processor 130 may obtain the temperature change information corresponding to the second position according to the unit fuel input amount based on the relationship between the input fuel information and the temperature value of the second position, and may use the obtained temperature change information to provide guidance information.

FIGS. 9A to 9D are drawings illustrating a method of providing a UI according to one embodiment.

According to one embodiment, the memory 120 may store process history information. According to one embodiment, the process history information may include temperature history information of the first position and temperature history information of the second position. Alternatively, according to one embodiment, the process history information may include history information on the input fuel and history information on the process state.

Referring to FIG. 9A, according to one embodiment, the processor 130 may provide a UI 900 including the process history information. According to one embodiment, the processor 130 may obtain temperature history information of a first position ARCH_#3 included in the process history information and temperature history information of a second position MELTER_BT_#11 based on the information stored in the memory 120. For example, the processor 130 may provide a UI 900 including graph information corresponding to the temperature history of the first position. Alternatively, for example, the processor 130 may provide the UI 900 including graph information corresponding to the temperature history of the second position.

Meanwhile, the electronic device 100 according to one embodiment may further include a display (not shown), and according to one embodiment, the processor 130 may display the UI 900 through the display (not shown).

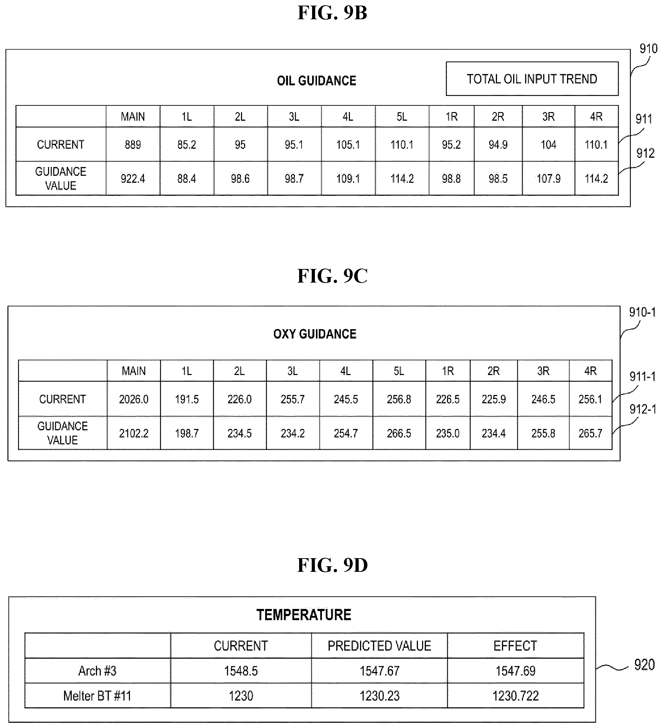

Referring to FIG. 9B, the processor 130 according to one embodiment may provide a UI 910 including guidance information on the amount of input fuel. According to one embodiment, the guidance information may include information 911 on the amount of currently input fuel corresponding to each of a plurality of fuel input units in the glass melting device 1 including a first fuel input unit and a second fuel input unit. Alternatively, according to one embodiment, the guidance information on the amount of input fuel may include guidance information 912 on the amount of fuel input into each of the plurality of input units in the glass melting device 1 including the first fuel input unit and the second fuel input unit. Here, each item (e.g., "MAIN," "1L," "2L," "3L," ..., and "4R") displayed on the UI corresponds to each of the plurality of fuel input units including a plurality of burners 19 included in the glass melting device 1.

Here, the guidance information 912 on the amount of input fuel refers to information on a recommended input amount corresponding to the fuel input into each of a plurality of positions (alternatively, a plurality of fuel input units) to reduce the amount of fuel input while the temperature of the second position is maintained in a predetermined range. That is, the guidance information 912 on the amount of input fuel refers to a recommended input amount that minimizes the amount of fuel input into each of the plurality of positions under the condition that the temperature of the second position is maintained in the predetermined range. Meanwhile, according to one embodiment, the processor 130 may use a predetermined algorithm to obtain the guidance information 912 on the amount of input fuel from the process information, the process history information, and the second predicted temperature information. Alternatively, the guidance information 912 on the amount of input fuel may be previously stored in the memory 120.

Referring to FIG. 9C, according to one embodiment, the processor 130 may provide a UI 910-1 that includes guidance information on the amount of oxygen corresponding to each of the plurality of fuel input units. According to one example, the guidance information on the amount of oxygen corresponding to each of the plurality of fuel input units may include information 911-1 on the current amount of oxygen corresponding to each of the plurality of fuel input units in the glass melting device 1 including the first fuel input unit and the second fuel input unit. Alternatively, the guidance information on the amount of oxygen corresponding to each of the plurality of fuel input units may include guidance information 912-1 on the amount of oxygen input into each of the plurality of fuel input units in the glass melting device 1 including the first fuel input unit and the second fuel input unit. Here, each item (e.g., "MAIN," "1L," "2L," "3L," ..., and "4R") displayed on the UI corresponds to each of the plurality of fuel input units including a plurality of burners 10 included in the glass melting device 1.

Here, the guidance information 912-1 on the amount of oxygen corresponding to each of the plurality of fuel input units refers to information on a recommended oxygen amount corresponding to each of the plurality of fuel input units to reduce the amount of input fuel while the temperature of the second position is maintained in a predetermined range. That is, the guidance information 912-1 on the amount of oxygen corresponding to each of the plurality of fuel input units refers to a recommended input amount that minimizes a recommended oxygen amount corresponding to each of the plurality of fuel input units under the condition that the temperature of the second position is maintained in the predetermined range. Meanwhile, according to one embodiment, the processor 130 may use a predetermined algorithm to obtain the guidance information 912-1 on the amount of oxygen corresponding to each of the plurality of fuel input units from the process information, the process history information, and the second predicted temperature information. Alternatively, the guidance information 912-1 on the amount of oxygen corresponding to each of the plurality of fuel input units may be previously stored in the memory 120.

Meanwhile, according to one embodiment, obviously, the processor 130 may provide the UI 910 including the guidance information on the amount of input fuel shown in FIG. 9B and the UI 910-1 including the guidance information on the amount of oxygen corresponding to each of the plurality of fuel input units together, or may provide the UI 910 including the guidance information on the amount of input fuel and the UI 910-1 including the guidance information on the amount of oxygen corresponding to each of the plurality of fuel input units separately.

Referring to FIG. 9D, according to one embodiment, the processor 130 may provide a UI 920 including predicted temperature information. According to one embodiment, the processor 130 may obtain the UI 920 including first predicted temperature information corresponding to the obtained first position ARCH_#3 and second predicted temperature information corresponding to the second position MELTER_BT_#11. In this case, the processor 130 may identify current temperature information corresponding to the first position and the second position based on the received process information and may provide the UI 920 including the current temperature information corresponding to the identified first position and second position. In this case, the processor 930 may use the trained first neural network model and the trained second neural network model to obtain an expected value (effect) when the fuel corresponding to the guidance information 912 is input. According to one embodiment, the expected value may include temperature information of the first position corresponding to the guidance information 912 and temperature information of the second position corresponding to the guidance information 912.

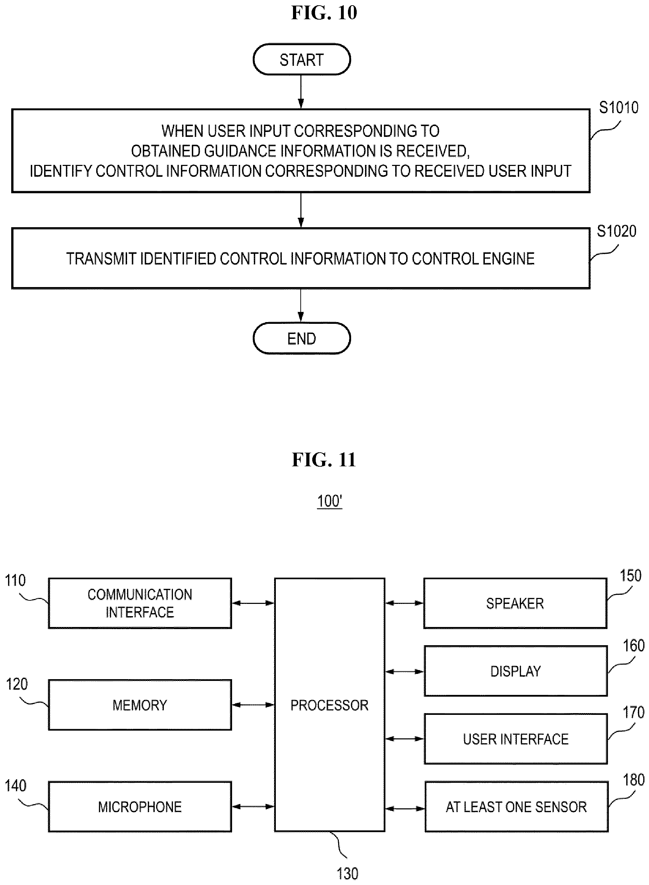

FIG. 10 is a diagram illustrating a method of identifying control information and transmitting the control information to a control engine according to one embodiment.

Referring to FIG. 10, when a user input corresponding to the obtained guidance information is received, in operation S 1010, the control method according to one embodiment may identify control information corresponding to the received user input. Here, the control information refers to a control signal for controlling the control engine, and the control engine refers to an engine for controlling the glass melting device 1. According to one embodiment, the electronic device 100 may further include a user interface (not shown), and the processor 130 may receive a user input corresponding to the guidance information obtained through the user interface (not shown). Next, the processor 130 may identify the control information corresponding to the received user input based on the information stored in the memory 120.

Next, according to one embodiment, in operation S1020, the control method may transmit the identified control information to the control engine. According to one example, the processor 130 may transmit the identified control information to the control engine through the communication interface 110. Here, the control engine is an engine for controlling the glass melting device 1.

FIG. 11 is a block diagram illustrating the detailed configuration of an electronic device according to one embodiment.

Referring to FIG. 11, an electronic device 100' may include a communication interface 110, a memory 120, one or more processors 130, a microphone 140, a speaker 150, a display 160, a user interface 170, and at least one sensor 180. Among the components shown in FIG. 11, detailed descriptions of components that overlap with those shown in FIG. 2 will be omitted.

The microphone 140 may refer to a module that acquires sound and converts the acquired sound into an electrical signal, and may be a condenser microphone, a ribbon microphone, a moving coil microphone, a piezoelectric element microphone, a carbon microphone, or a micro electro mechanical system (MEMS) microphone. In addition, the microphone 140 can be implemented in omni-directional, bi-directional, uni-directional, sub-cardioid, super-cardioid, and hyper-cardioid methods.

There may be various embodiments in which the electronic device 100' performs an operation corresponding to a user voice signal received through the microphone 140.

For example, the electronic device 100' may control the display 160 based on the user voice signal received through the microphone 140. For example, when a user voice signal for displaying content A is received, the electronic device 100' may control the display 160 to display content A.

For another example, the electronic device 100' may control an external display device connected to the electronic device 100' based on the user voice signal received through the microphone 140. Specifically, the electronic device 100' may provide a control signal for controlling the external display device to allow an operation corresponding to the user voice signal to be performed in the external display device, and transmit the provided control signal to the external display device. Here, the electronic device 100' may store a remote control application for controlling the external display device. In addition, the electronic device 100' may transmit the provided control signal to the external display device using at least one communication method of Bluetooth, Wi-Fi, and infrared. For example, when the user voice signal for displaying content A is received, the electronic device 100' may transmit a control signal for controlling content A to be displayed on the external display device, to the external display device. Here, the electronic device 100' may refer to various terminal devices that can install a remote control application, such as a smartphone or AI speaker.

As another example, the electronic device 100' may use a remote control device to control an external display device connected to the electronic device 100' based on the user voice signal received through the microphone 140. Specifically, the electronic device 100' may transmit the control signal for controlling the external display device to the remote control device to allow the operation corresponding to the user voice signal to be performed on the external display device. The remote control device may transmit the control signal received from the electronic device 100' to the external display device. For example, when the user voice signal for displaying content A is received, the electronic device 100' may transmit the control signal for controlling content A to be displayed on an external display device to the remote control device, and the remote control device may transmit the received control signal to the external display device.

The speaker 150 may include a tweeter for reproducing high-pitched sounds, a midrange for reproducing mid-pitched sounds, a woofer for reproducing low-pitched sounds, a subwoofer for reproducing extremely low-pitched sounds, an enclosure for controlling resonance, and a crossover network that divides the frequency of an electrical signal input to the speaker by band.

The speaker 150 may output an acoustic signal to the outside of the electronic device 100'. The speaker 150 may output multimedia playback, recording playback, various notification sounds, voice messages, etc. The electronic device 100' may include an audio output device such as the speaker 150, or include an output device such as an audio output terminal. In particular, the speaker 150 may provide acquired information, information processed and produced based on the acquired information, response results to the user voice inputs, or operation results, etc., in the form of voice.

The display 160 may be implemented as a display including a self-emitting device or a display including a non-self-emitting device and a backlight. For example, the display 160 can be implemented as various types of displays such as a liquid crystal display (LCD), an organic light emitting diode (OLED) display, light emitting diodes (LED), micro LEDs, Mini LEDs, a plasma display panel (PDP), a quantum dot (QD) display, quantum dot light-emitting diodes (QLED), and the like. The display 160 may also include a driving circuit that may be implemented in the form of an a-si thin film transistor (TFT), a low temperature poly silicon (LTPS) TFT, or an organic TFT (OTFT), a back light unit, and the like. Meanwhile, the display 160 may be implemented as a touch screen combined with a touch sensor, a flexible display, a rollable display, a 3D display, or a display in which a plurality of display modules are physically connected. The processor 130 may control the display 160 to output the output image obtained according to the various embodiments described above. Here, the output image may be a high-resolution image of 4K or 8K or higher.

Meanwhile, according to another embodiment, the electronic device 100' may not include the display 160. The electronic device 100' may be connected to an external display device, and transmit images or content stored in the electronic device 100' to the external display device. Specifically, the electronic device 100' may transmit images or content to the external display device along with a control signal for controlling the images or content to be displayed on the external display device.

Here, the external display device may be connected to the electronic device 100' through a communication interface 110 or an input/output interface (not shown). For example, the electronic device 100' may not include a display, such as in a set top box (STB). In addition, the electronic device 100' may include only a small display capable of displaying only simple information such as text information. Here, the electronic device 100' may transmit the images or content to the external display device wired or wirelessly through the communication interface 110, or may transmit the images or content to the external display device through an input/output interface (not shown).

The user interface 170 is a component that allows the electronic device 100' to perform interaction with a user. For example, the user interface 170 may include at least one of a touch sensor, a motion sensor, a button, a jog dial, a switch, a microphone, and a speaker, but is not limited thereto.

At least one sensor 180 (hereinafter referred to as sensor) may include various types of a plurality of sensors. The sensor 180 may measure a physical quantity or detect the operating state of the electronic device 100', and convert the measured or detected information into an electrical signal. The sensor 180 may include a camera, and the camera may include a lens that focuses visible light or other optical signals reflected by an object and received onto an image sensor, and an image sensor that can detect visible light or other optical signals. Here, the image sensor may include a 2D pixel array divided into a plurality of pixels.

According to the above-described embodiment, the internal temperature of the glass melting device and the temperature of the molten glass can be predicted using the trained neural network model. Based on this, the electronic device 100' can provide the user with guidance information for minimizing the amount of input fuel while maintaining the temperature of the molten glass within an appropriate range.

Meanwhile, the methods according to various embodiments of the present disclosure described above may be implemented in the form of applications that can be installed on existing electronic devices. Alternatively, the methods according to various embodiments of the present disclosure described above may be performed using a deep learning-based trained neural network (or deep trained neural network), that is, learning network model. In addition, the methods according to various embodiments of the present disclosure described above may be implemented only by software upgrade for an existing electronic device, or hardware upgrade. In addition, the various embodiments of the present disclosure described above may also be performed through an embedded server provided in an electronic device or an external server of the electronic device.

Meanwhile, according to one embodiment of the present disclosure, the various embodiments described above may be implemented as software including instructions stored in a machine-readable storage medium (e.g., a computer). The device is a device capable of calling the stored instructions from the storage medium and operating according to the called instructions and includes a display device (e.g., display device A) according to the disclosed embodiments. When an instruction is executed by a processor, the processor may perform a function corresponding to the instruction directly or using other components under the control of the processor. The instruction may contain codes provided or executed by a compiler or interpreter. The machine-readable storage medium may be provided in the form of a non-transitory storage medium. Here, the term "non-transitory" only means that a storage medium is a device that is tangible and does not include a signal (e.g., electromagnetic wave), and the term does not distinguish between a case where data is semi-permanently stored and a case where it is temporarily stored.

In addition, according to one embodiment, the methods according to various embodiments described above may be provided by being included in a computer program product. The computer program products may be traded between sellers and buyers as products. The computer program products may be distributed in the form of machine-readable storage medium (e.g., a compact disc read only memory (CD-ROM)) or distributed online through an application store (e.g. Play Store^{™}). In the case of online distribution, at least some of the computer program products may be at least temporarily stored or temporarily provided on a storage medium such as a manufacturer's server, a server in an application store, or a memory in a relay server.

In addition, each component (e.g., module or program) according to the various embodiments described above may be composed of a single or multiple entities, and some of the sub-components described above may be omitted, or other sub-components may be included in various embodiments. Alternatively or additionally, some components (e.g., modules or programs) may be integrated into a single entity and perform the same or similar functions performed by each corresponding component prior to integration. According to various embodiments, operations performed by a module, a program, or another component may be executed sequentially, in parallel, iteratively, or heuristically, or at least some operations may be executed in a different order, omitted, or other operations may be added.

According to the above-described embodiment, the internal temperature of the glass melting device and the temperature of the molten glass can be predicted using the trained neural network model. Based on this, the electronic device 100 can provide the user with guidance information for minimizing the amount of input fuel while maintaining the temperature of the molten glass within an appropriate range.

In the above, exemplary embodiments of the present disclosure have been shown and described, but the present disclosure is not limited to the specific embodiments described above, and may be used in the technical field pertaining to the disclosure without departing from the gist of the disclosure as claimed in the claims. Of course, various modifications can be made by those skilled in the art, and these modifications should not be understood individually from the technical ideas or perspectives of the present disclosure.

## Claims

1. An electronic device for implementing a temperature prediction and control system, the electronic device comprising:
a communication interface;
a memory in which a trained first neural network model and a trained second neural network model are stored; and
one or more processors configured to:
perform preprocessing, when process information including fuel input information for a glass melting device is received through the communication interface, on the received process information;
input the preprocessed process information into the trained first neural network model and obtain first predicted temperature information corresponding to a first position of the glass melting device;
input the obtained first predicted temperature information and the preprocessed process information into the trained second neural network model and obtain second predicted temperature information corresponding to a second position of the glass melting device; and
provide guidance information including the obtained first predicted temperature information and the obtained second predicted temperature information.

2. The electronic device of claim 1, wherein:
the preprocessed process information includes the fuel input information and process state information;
the fuel input information includes information on an amount of fuel input into the glass melting device;
when the preprocessed process information including the information on the amount of fuel input into the glass melting device is input, the trained first neural network model is trained to output the first predicted temperature information according to the amount of input fuel; and
when the output first predicted temperature information and the preprocessed process information are input, the trained second neural network model is trained to output the second predicted temperature information according to the amount of input fuel.

3. The electronic device of claim 1, wherein:
the memory further includes temperature change information corresponding to the second position according to a unit fuel input amount; and
the one or more processors obtain, when it is identified that the obtained second predicted temperature information is out of a predetermined range, guidance information to guide the second predicted temperature information to fall within the predetermined range based on information stored in the memory, and provide a user interface (UI) including the obtained guidance information.

4. The electronic device of claim 3, wherein the one or more processors identify sub-fuel input information in which the information on an amount of input fuel included in the fuel input information has changed,
obtain second sub-predicted temperature information by inputting sub-process information including the sub-fuel input information into the trained second neural network model, and
obtain the temperature change information corresponding to the second position according to the unit fuel input amount by using the second predicted temperature information and the second sub-predicted temperature information.

5. The electronic device of claim 3, wherein the preprocessed process information further includes process history information including history information on an amount of input fuel and history information on a temperature at the second position, and
the one or more processors identify relationship information between the amount of input fuel and the temperature at the second position based on the process history information, and
obtain and store the temperature change information corresponding to the second position according to the unit fuel input amount based on the identified relationship information.

6. The electronic device of claim 3, wherein the one or more processors provide a UI including process history information including temperature history information at the first position and temperature history information at the second position.

7. The electronic device of claim 1, further comprising a user interface,
wherein, when a user input corresponding to the obtained guidance information is received through the user interface, the one or more processors identify control information corresponding to the received user input and transmit the identified control information to a control engine through the communication interface.

8. A control method of an electronic device for implementing a temperature prediction and control system, the control method comprising:
performing preprocessing, when process information including fuel input information for a glass melting device is received, on the received process information;
inputting the preprocessed process information into a trained first neural network model and obtaining first predicted temperature information corresponding to a first position of the glass melting device;
inputting the obtained first predicted temperature information and the preprocessed process information into a trained second neural network model and obtaining second predicted temperature information corresponding to a second position of the glass melting device; and
providing guidance information including the obtained first predicted temperature information and the obtained second predicted temperature information.

9. The control method of claim 8, wherein:
the preprocessed process information includes the fuel input information and process state information;
the fuel input information includes information on an amount of fuel input into the glass melting device;
when the preprocessed process information including the information on the amount of fuel input into the glass melting device is input, the trained first neural network model is trained to output the first predicted temperature information according to the amount of input fuel; and
when the output first predicted temperature information and the preprocessed process information are input, the trained second neural network model is trained to output the second predicted temperature information according to the amount of input fuel.

10. The control method of claim 8, wherein the providing of the guidance information includes obtaining, when it is identified that the obtained second predicted temperature information is out of a predetermined range, the guidance information to guide the second predicted temperature information to fall within the predetermined range based on temperature change information corresponding to the second position according to a unit fuel input amount stored in a memory, and
the control method further comprising providing a UI including the obtained guidance information.

11. The control method of claim 10, further comprising:
identifying sub-fuel input information in which information on an amount of input fuel included in the fuel input information has changed;
inputting sub-process information including the sub-fuel input information into the trained second neural network model and obtaining second sub-predicted temperature information; and
obtaining the temperature change information corresponding to the second position according to the unit fuel input amount by using the second predicted temperature information and the second sub-predicted temperature information.

12. The control method of claim 10, further comprising:
identifying relationship information between an amount of input fuel and the temperature at the second position based on process history information including history information on the amount of input fuel and temperature history information at the second position; and
obtaining and storing the temperature change information corresponding to the second position according to the unit fuel input amount based on the identified relationship information.

13. The control method of claim 10, wherein the providing of the UI includes providing a UI including temperature history information at the first position and temperature history information at the second position.

14. The control method of claim 8, further comprising:
when a user input corresponding to the obtained guidance information is received, identifying control information corresponding to the received user input; and
transmitting the identified control information to a control engine.

15. A non-transitory computer-readable recording medium that stores, when executed by a processor of an electronic device for implementing a temperature prediction and control system, computer instructions that cause the electronic device to perform operations which include:
performing preprocessing, when process information including fuel input information for a glass melting device is received, on the received process information;
inputting the preprocessed process information into a trained first neural network model and obtaining first predicted temperature information corresponding to a first position of the glass melting device;
inputting the obtained first predicted temperature information and the process information into a trained second neural network model and obtaining second predicted temperature information corresponding to a second position of the glass melting device; and
providing guidance information including the obtained first predicted temperature information and the obtained second predicted temperature information.
